# EUROPEAN PATENT SPECIFICATION

(11) **EP 1 521 531 B1**
(45) Date of publication and mention of the grant of the patent: **29.07.2009**
(21) Application number: 03736928.7
(22) Date of filing: 06.06.2003
(51) Int. Cl.: A21D 2/02, A21D 2/14, A21D 10/02, A21D 10/00

(54) **DOUGH COMPOSITION AND METHOD FOR MAKING TORTILLAS**
TEIGZUSAMMENSETZUNG UND VERFAHREN ZUR HERSTELLUNG VON TORTILLAS
COMPOSITION DE PATE ET PROCEDE DE FABRICATION DE TORTILLAS

(30) Priority: 07.06.2002 US 386785 P
(43) Date of publication of application: 13.04.2005
(73) Proprietor: Innophos, Inc., Cranbury, NJ 08512-8000 (US)
(72) Inventor: CHEDID, Lisa, Kendall Park, NJ 08824 (US); TOCZEK, John, Joseph, Somerset, NJ 08873 (US); BRODIE, John, David, Penndel, PA 19047 (US)
(74) Representative: OK pat AG
(86) International application number: PCT/US2003/018017
(87) International publication number: WO 2003/103403

(56) References cited:
- WO-A-92/01384
- US-A- 2 810 650
- CEPEDA MINERVA ET AL: "Effects of leavening acids and dough temperature in wheat flour tortillas" CEREAL CHEMISTRY, vol. 77, no. 4, July 2000 (2000-07), pages 489-494, XP009019968 ISSN: 0009-0352
- PYLER, E.J.: "Baking science and technology" 1988, SOSLAND PUBLISHING , KANSAS (USA) * page 928 - page 936 * * page 1068 - page 1071 *

## Description

### 1. Field of the invention

The present invention relates to a dough composition for making tortillas. The present invention further relates to a dough composition for making tortillas having enhanced physical and product properties and qualities. The present invention still further relates to methods for making tortillas.

### 2. Description of the Prior Art

Tortillas are manufactured commercially by forming a dough, flattening the dough to form dough flats, and baking the flats until they leaven and ultimately set. Representative manufacturing processes include pressing, die cutting and hand stretching. The dough typically comprises flour, a leavening system, shortening, and water. The leavening system comprises a leavening base, e.g. sodium bicarbonate, and one or more leavening acids. The leavening base and leavening acid(s) react to yield carbon dioxide (neutralization reaction), which, along with any other gases present, leaven the dough.

The composition of the leavening system may vary depending upon the desired leavening profile. The leavening profile is usually regulated by selection of type and amount of leavening acid(s). Leavening acids may exhibit varying reaction rates and activation temperatures. Examples of leavening acids are sodium aluminum phosphate (SALP), sodium acid pyrophosphate (SAPP), dicalcium phosphate dihydrate (DCPD), monocalcium phosphate (anhydrous and monophosphate) (MCP), sodium aluminum sulfate (SAS), and organic acids such citric acid and fumaric acid.

A problem in manufacturing tortillas is a premature leavening profile. The tortillas are generally prepared by forming a dough, flattening the dough to form dough flats and baking the flats until they leaven and set. A number of manufacturing methods are employed commercially. The methods include pressing, die cutting and hand stretching. Manufacturers also typically use dough formulations employing a leavening system having a leavening base of sodium bicarbonate and a leavening acid of monocalcium phosphate (MCP), sodium aluminum phosphate (SALP), sodium aluminum sulfate (SAS) or sodium acid pyrophosphate (SAPP). When such dough formulations are baked, the dough formulations exhaust their leavening gases and begin to lose their leavening (begin to collapse) prematurely. A premature leavening profile may negatively impact cell structure, opacity, pliability, appearance, texture and eating quality in tortillas. Manufacturers usually make up for what is lost due to premature leavening profile by increasing the level of leavening agents by as much as 15 wt% based on flour weight.

US Patent No. 2,810,650 describes the use of DCPD as a leavening agent in refrigerated doughs and batters without excessive gas evolution.

The functionality of various leavening acids in wheat tortilla production is described in Cepeda Minerva et al., "Effects of leavening acids and dough temperatures in wheat flour tortillas", CEREAL CHEMISTRY, vol. 77, no. 4, July 2000, p. 489- 494.

Common technical knowledge regarding chemical leavening agents and their use in wheat tortilla preparation are described in Pyler, E. J., Baking science and technology, Scosland Publishing (1988).

It would be desirable to have a dough formulation and a method for making tortillas wherein a more delayed leavening profile is obtained. It would further be desirable to have a dough formulation and methods for making tortillas wherein the total leavening required to achieve optimum physical and product quality is reduced.

### SUMMARY OF THE INVENTION

According to the present invention, there is a dough composition. The dough composition has flour, shortening, water, and a leavening system. The leavening system has a leavening base and leavening acid. The leavening acid is a combination of acids selected from the group consisting of 1) sodium aluminum phosphate and dicalcium phosphate dihydrate; 2) sodium acid pyrophosphate and dicalcium phosphate dihydrate; 3) sodium aluminum phosphate, sodium acid pyrophosphate and dicalcium phosphate dihydrate; In any combination, the slower or slowest reacting of the acids comprises at least 10 wt%, preferably at least 15 wt% and most preferably about 15 wt% to about 40 wt% of the total weight of the acid combination. A preferred leavening acid has a neutralizing value of about 40 to about 65. It is particularly desirable to have a sodium acid pyrophosphate that exhibits an evolved percentage of carbon dioxide of about 26 or less and preferably about 20 or less at room temperature prior to baking (i.e during the mixing and forming stage.

Further according to the present invention, there is a method for making tortillas. The method has the steps of providing the dough composition described above, allowing the dough to relax, dividing and rounding the dough composition to form a plurality of discrete dough balls, allowing the dough balls to relax, pressing the relaxed dough balls under heat and pressure to form relatively thinner dough flats, and baking the dough flats to form the tortillas.

Further according to the present invention, there is a method for making tortillas. The method has the following steps: a) providing a dough composition; b) allowing the dough composition to relax; c) flattening the relaxed dough composition to form relatively thinner dough flats; and d) baking the dough flats to form the tortillas.

Further according to the present invention, there is a method for making tortillas. The method has the following steps: a) providing a dough composition; b) allowing the dough composition to relax; c) dividing and rounding the relaxed dough composition to form a plurality of discrete dough balls, d) freezing the dough balls, e) thawing the dough balls to a higher temperature, f) flattening the dough balls to form relatively thinner dough flats and g) baking the dough flats to form tortillas.

Further according to the present invention, there is a method for making tortillas. The method has the following steps: a) providing a dough composition; b) allowing the dough composition to relax; c) rolling the dough to form a sheet; d) cutting the dough to form discrete dough flats and e) baking the dough flats to form the tortillas.

Further according to the present invention, there is a method for making tortillas. The method has the following steps: a) providing a dough composition; b) allowing the dough composition to relax; c) dividing and rounding the dough composition to form a plurality of discrete dough balls; d) allowing the dough balls to relax; e) rolling the relaxed dough balls to form relatively thinner dough flats; f) reshaping the periphery of the dough flats; and f) baking the reshaped dough flats to form the tortillas.

Further according to the present invention, there is a tortilla dough composition having flour, shortening, water, and leavening system having DCPD as a leavening acid, according to the appended claims.

### DETAILED DESCRIPTION OF THE INVENTION

It was found surprising that a dough could be formulated to provide a more delayed leavening profile. It was found further surprising that there could be a method for making tortillas wherein the leavening profile is more delayed or more attenuated. It was found still further surprising that such tortillas could have enhanced physical and product qualities especially at lower levels of leavening system than usually required.

In the present invention, the more delayed or attenuated leavening profile is obtained by employing a leavening system having any of the following six combinations of leavening acids: 1) SALP and DCPD; 2) SAPP and DCPD; 3) SALP, SAPP, and DCPD; SALP is sodium aluminum phosphate. SAPP is sodium acid pyrophosphate and exhibits an evolved percentage of carbon dioxide of preferably about 30 or less, more preferably about 26 or less and most preferably about 20 or less at room temperature prior to baking (during mixing and forming). DCPD is a relatively slow-reacting acid and further has a relatively high reaction activation temperature. DCPD is the slowest-reacting leavening acid. Among SALP, SAS and SAPP, relative reaction rates can vary and any can be the slower reacting acid. In any combination, the slower or slowest reacting of the acids comprises at least 10 wt%, preferably at least 15 wt%, more preferably about 15 wt% to about 50 wt% and most preferably about 15 wt% to about 40 wt% of the total weight of the acid combination. A preferred combination is SAPP and DCPD. A preferred leavening acid combination or blend has a neutralizing value of about 40 to 65.

The relatively slow reaction rate and/or higher activation temperature of the slower reacting acid, most typically SAPP and/or DCPD, ensure that additional carbon dioxide will be liberated later in the baking process. This additional carbon dioxide gives the dough an additional "kick" or "puff" that ensures the dough will maintain a sufficient degree of leavening just prior to setting. The dough is considered to have set when it has solidified sufficiently that it substantially maintains its shape and form after removal from the oven and is exposed to ambient temperature and pressure.

The presence of the faster-acting or fastest-acting leavening acid in the combination ensures that proper nucleation takes place in the dough. The presence of the faster-acting or fastest-acting leavening acid in the combination ensures that some degree of carbon dioxide generation will take place before baking and/or during the initial stages of baking. If only a fast acting acid is used, there is not enough available during the baking process to "puff" the tortilla.

SALP compounds useful in the present invention include Levair by Rhodia Inc., LEV-N-LITE by Astaris, and BUDAL 2308, 2312, and 2315 by Budenheim. Useful SAPP compounds with the desired reaction profile include but are not limited to SAPP#4 by Rhodia Inc., RD-1 by Astaris, and SAPP 15 and SAPP 20 by Budenheim.

Any of the aforementioned combinations of leavening acids may be further combined with other leavening acid(s). The additional acid(s) may be an acid found in another combination or another known acid not found in any of the acid combinations. Additional acids not found in the combinations include monosodium phosphate (MSP), monocalcium phosphate (MCP), and organic acids such as citric acid and fumaric acid and encapsulated and/or coated versions thereof.

In another embodiment of the present invention, DCPD may be used as a leavening acid in combination with co-leavening acids in addition to those described above (SALP/DCPD, SALP/SAPP/DCPD). Combinations with MSP, MCP and organic acids such as citric acid and fumaric acid and encapsulated and/or coated versions thereof are also possible. Preferably, the co-leavening acid is faster-acting than DCPD. Use concentration levels are the same as for the combinations described above. In preferred blends, the relative concentrations for DCPD and a faster-acting co-leavening agent is the same as for the combinations described above.

Additional teachings directed to leavening systems are described in Chemical Leavening Agents, Encyclopedia of Chemical Technology, 4th Ed., vol. 3, pp. 893-901 (1992)

The composition and method of the present invention can be used to make flour tortillas. Flour is derived from a grain such as wheat. The flour used must have sufficient gluten content and quality to withstand processing and retain gas. Flour sold commercially for home use and for food product manufacturing typically is of sufficient content and quality with which to manufacture tortillas. An example of a suitable flour is that having a protein content of about 9 wt% to about 14 wt% and more preferably about 9 wt% to about 12 wt% based upon flour weight.

The term "shortening" is used to describe any animal or vegetable based oils or fats added to the dough to facilitate lubrication and processability. Shortening is preferably derived from hydrogenated vegetable based oils or fats.

Salt may optionally be added to the flour to toughen and strengthen the dough. Salt can enhance product flavor and shelf stability and dough processability. Salt is typically employed at about 0.5 wt% to about 5 wt% and most typically about 1 wt% to about 3 wt%.

Dough is formed by first mixing the dry ingredients (flour, leavening agents, salt, etc) with shortening, then water. The shortening is typically about 2 to about 20 wt% and more typically about 6 to about 10 wt% based upon the flour weight. Water is typically about 40 to about 100 wt% and more typically about 50 to about 60 wt% based upon the flour weight and can be optimized by water absorption measurements using a farinograph to a 750 BU (Brabender Units) level. The complete leavening system (base plus acid) is typically 0.5 to about 8.0 wt%, more typically about 0.5 to about 5.0 wt%, still more typically about 0.5 to about 3 wt%, still yet more typically about 1 to about 3 wt%, and most typically about 1 to about 2 wt% based upon the flour weight.

The tortillas are generally prepared by forming a dough, flattening the dough to form dough flats and baking the flats until they leaven and set. A number of manufacturing methods are employed commercially. The methods include pressing, die cutting and hand stretching.

The pressing method has the following steps: a) preparing the dough composition as described above, b) allowing the dough to relax, c) dividing and rounding the dough composition to form a plurality of discrete dough balls, d) allowing the dough balls to relax, e) pressing the relaxed dough balls under heat and pressure to form relatively thinner dough flats, and f) baking the dough flats to form the tortillas.

After the dough is formed, the dough is proofed for a period of time sufficient to allow the dough time to hydrate and relax. Preferably, the dough is allowed to proof for about 5 minutes or more. Relaxation is important to achieving good end product physical properties. The dough is then divided and rounded to form a plurality of discrete dough balls. The balls may be any shape but preferably are substantially spherical. Optionally, the dough may be maintained at an elevated temperature, i.e. about 32.2°C to about 37.8°C (85°F to about 100°F), during proofing.

After the dough has been divided and rounded into balls, it is allowed to rest again. The time of relaxation is preferably at least about 5 minutes, more preferably at least about 10 minutes and most preferably about 10 to about 30 minutes. Optionally, the dough may be maintained at an elevated temperature, i.e. about 32.2°C to about 37.8°C (85°F to about 100°F) during relaxation.

The relaxed dough balls are then pressed under elevated heat and pressure between platens or other flat surfaces to form relatively thinner dough flats. Preferably, one platen is stationary and the other actuates. The temperature and pressure will vary depending on the size and shape of the balls, properties of the dough, and the desired thickness and/or diameter of the flats. Pressure applied to the balls preferably ranges from about 2758 to about 7585 kilopascals (400 to about 1200 pounds per square inch). Temperature of the platens preferably varies from about 177°C to about 260°C (350°F to about 500°F) and most preferably from about 177°C to about 232°C (350°F to about 450°F). The temperature of the dough balls just prior to pressing preferably ranges from about 32.2°C to about 37.8°C (85°F to about 100°F).

The dough flats are then baked (heated) at an elevated temperature or temperature profile to a setting point to form tortillas. During baking, the dough flats leaven upon generation of carbon dioxide and expansion of gases. Baking temperatures preferably range from about 182°C to about 260°C (360°F to about 500°F). Baking times preferably range from about 10 seconds or more, more preferably about 30 to about 50 seconds and most preferably about 35 to 45 seconds. Baking may take place at a constant temperature or at different temperatures. Ovens may have a single temperature zone or tier or multiple temperature zones or tiers. Useful oven types include, but are not limited to, single-tier and three-tier ovens. In a preferred method, baking takes place in a three-tiered oven.

After baking, the tortillas are cooled and packaged for shipment to consumers. The tortillas are preferably cooled to a temperature of about 30°C or less. Cooling prevents tortillas from sticking together and limits moisture condensation inside packaging.

The die cutting method has the following steps: a) preparing the dough composition as described above, b) allowing the dough to relax as described above, c) rolling the dough to form a sheet, d) cutting the dough to form discrete dough flats, e) baking (heating) the dough flats to form tortillas as described above. The dough is typically rolled to sheet form by passing it between juxtapositioned hollers although any method for flattening dough known in the are such as pressing or use of a rolling pin over a stationary surface may be employed. The sheet may cut by any means known in the art such as with a die, cutout or raised surface.

The hand stretch method is similar to the pressing method except that relaxed dough balls are rolled to form relatively thinner dough flats rather than by pressing. Rolling of dough balls is carried as described above for the rolling of dough into a sheet. The periphery of the dough flats may optionally be modified by manipulation by hand or other mechanical contact. The dough flats are then baked (heated) to form tortillas as described above.

Other commercial methods employ freezing steps. Relaxed dough balls are formed as described above and are frozen for storage and/or transport to restaurants and food service facilities. The frozen dough balls are allowed to thaw to machineable higher temperatures and then are pressed or rolled to form discrete dough flats, which are then baked (heated) to form tortillas as described above.

Other teachings to methods for making tortillas are also described in the publication Methods to Prepare and Evaluate Wheat Tortillas, Cereal Foods Worlds, vol. 36, no. 3, pp. 315 to 322 (1991).

The methods of the present invention can afford tortillas that have enhanced physical and product quality, such as better specific volume, product height and diameter, texture, cell structure, appearance, opacity, eating quality, pliability, rollability and the like.

The dough composition may optionally comprise other ingredients, such as preservatives, emulsifiers, vitamins, dough conditioners, enzymes, reducing agents, acidulants and antimicrobials. Such ingredients can improve dough machineability, tortilla appearance and shelf life.

If desired, corn-based additives or ingredients, such as corn meal or corn flour, can be added to wheat-based flour to make tortillas.

The present invention is useful in dough compositions for other than tortillas. The present invention is useful in dough compositions for focaccia, pita, naan and roti breads.

Unless otherwise indicated, percentages and parts are expressed in the following examples on a flour weight basis.

### EXAMPLES

Tortillas were prepared in accordance with the present invention and compared to tortillas leavened with a control baking powder.

The baking powders employed to make the tortillas of the present invention were the following: SALP/DCPD (60/40); SALP/SAPP #4 (60/40) and SAPP #4/DCPD (60/40). The SALP employed was by Levair. The control baking powder employed was Regent 12xx/BP Pyro 20/80, which is MCP/SAPP. One control was at full leavening amount (based on 0.6% fwb sodium bicarbonate fine granular) flour weight basis (fwb). All four experimental products were tested at 20% reduction in leavening (i.e. 0.5% fwb SBC).

**Table 1**

| | **Full** | **20% reduction in leavening** | | | |
|---|---|---|---|---|---|
| **Ingredient** | **leavening** | | | | |
| | **100%** | | **(60/40)** | **(60/40)** | **(60/40)** |
| | **Control* (MCP/SAPP)** | **Control* (MCP/SAPP)** | **SALP+ DCPD** | **SALP+ SAPP#4** | **SAPP#4+ DCPD** |
| Flour | 1000 | 1000 | 1000 | 1000 | 1000 |
| Salt | 15 | 15 | 15 | 15 | 15 |
| SSL | 5 | 5 | 5 | 5 | 5 |
| Potassium Sorbate | 4 | 4 | 4 | 4 | 4 |
| Sodium Propionate | 5 | 5 | 5 | 5 | 5 |
| Sodium Bicarbonate | 6 | 5 | 5 | 5 | 5 |
| Leavening acid | 1.63 | 1.36 | 4.1 | 3.38 | 5.32 |
| Leavening acid | 6.52 | 5.43 | 2.73 | 2.25 | 3.55 |
| Coated Fumaric | 3.5 | 3.5 | 3.5 | 3.5 | 3.5 |
| Cysteine | 0.03 | 0.03 | 0.03 | 0.03 | 0.03 |
| Shortening | 60 | 60 | 60 | 60 | 60 |
| Water | 525 | 525 | 525 | 525 | 525 |

| | | | | | |
|---|---|---|---|---|---|
| * Not an example of the present invention. | | | | | |

### Preparation of Wheat Tortilla Dough

The flour used was ConAgra Buccaneer Bakers Flour (malted and bleached). The moisture absorption for the flour as determined by farinograph was 53%. Tap water was used for all experiments.

A Hobart mixer was used for dough mixing. The mixing procedure was as follows: a) dry materials were mixed for 2 minutes at low speed using a paddle; b) shortening was then added and mixed continuously another 6 minutes; c) the mixer blade was changed to a hook type, and water was added and the dough mixed about 2 minutes at low speed until no dry flour could be seen; d) the dough was then mixed at medium speed about 2-4 minutes until a soft, cohesive, and pliable dough was obtained. After mixing, the dough was covered with plastic film and rested (relaxed) for 5 minutes at room temperature (21°C).

The rested dough was manually pre-sheeted, mechanically pressed, divided into 36 dough pieces, and rounded into small dough balls for 35 seconds using a Dutchess dough divider and rounder. The dough balls were covered with plastic film and rested 10 minutes at room temperature (21°C) before they were hot pressed and baked.

A pilot line including pressing platens, a three-tier gas oven (model 0P01004-07 Micro Combo W/Head), and a five-tier cooling conveyor (model OCC1208-03 by Lawrence Equipment) was used to prepare the tortillas. Both top and bottom hot plate temperatures were set at 196°C. Press time was 0.8 seconds using a medium pressure setting. The oven temperature was set at 204°C, and the oven dwell time was 40 seconds.

Total tortilla cooling time at room temperature after baking and just before packaging was 20 minutes, i.e., 2 minutes on the cooling conveyer and 18 minutes on a table with each tortilla individually separated. Tortillas were then stored in polyethylene bags at room temperature (21°C) for 33 (or more) days. There were a maximum of 15 tortillas per bag.

### Wheat Tortilla Dough Evaluation

The pliability of tortilla dough was subjectively evaluated during its manual pre-sheeting (after a 5-minute rest) on a 1-5 scale where 1 = very stiff with poor extensibility; 2 = stiff and poorly extensible; 3 = fairly soft and extensible; 4 = soft with good extensibility and elasticity; 5 = soft and having an excellent balance between extensibility and elasticity. Dough softness was rated on a 1-5 scale as well with higher numbers (points) indicating softer dough characteristics.

Dough ball smoothness, after the 10-minute resting period, was rated using a 1-5 point scale. Higher numbers (points) indicate smoother dough balls (desirable).

### Wheat Tortilla Characterization

Ten (10) 1-day stored tortillas were stacked and measured to determine the average tortilla thickness (mm) and weight (g) per piece. Baked tortilla diameters (cm) were measured at two diagonals on each of 10 tortillas per sample, and the overall mean was calculated. A tortilla specific volume (cm³/g) index was accordingly calculated.

### Results

In the first set of experiments, 3 blends of phosphates were examined at 80% leavening and compared to a fully leavened control and 80% leavened control. The results are set forth in Table 2 and Figures 1 to 5.

**Table 2**

| | **Control** | **Control** | **SALP/** | **SALP/** | **SAPP#4/** |
|---|---|---|---|---|---|
| **Property** | **#1*** | **#2*** | **DCPD** | **SAPP#4** | **DCPD** |
| Leavening Level | 100% | 80% | 80% | 80% | 80% |
| Dough Smoothness (1-5) | 3.8 | 3.8 | 4.0 | 4.0 | 4.0 |
| Dough Softness (1-5) | 4.0 | 4.0 | 4.0 | 4.2 | 4.2 |
| Dough Pliability (1-5) | 3.8 | 4.0 | 4.2 | 4.2 | 4.2 |
| Tortilla Diameter (cm) | 16.5 | 16.8 | 17.2 | 17.3 | 16.9 |
| Tortilla Thickness (mm) | 3.5 | 3.2 | 3.4 | 3.7 | 3.9 |
| Tortilla Weight (g) | 39.6 | 39.0 | 39.2 | 39.1 | 38.9 |
| Specific Volume (cm³/g) | 1.89 | 1.82 | 2.01 | 2.22 | 2.25 |

| | | | | | |
|---|---|---|---|---|---|
| * Not an example of the present invention | | | | | |

The three blends (SALP/DCPD, SALP/SAPP#4, SAPP#4/DCPD) exhibited better dough handling properties than the controls (both at 100% and 80% leavening). This demonstrated that it was possible to improve manufacturing processing parameters with a reduction in overall leavening

All three leavening blends exhibited enhanced finished product properties improve over the control with 20% reduction in overall leavening. The highest thicknesses and specific volumes were obtained with SALP/SAPP #4 and SAPP#4/DCDP.

## Claims

1. A dough composition, comprising:
A) flour;
B) shortening;
C) water; and
D) a leavening system having a leavening base and a leavening acid combination selected from the group consisting of
a) sodium aluminum phosphate and dicalcium phosphate dihydrate;
b) sodium acid pyrophosphate and dicalcium phosphate dihydrate;
c) sodium aluminum phosphate, sodium acid pyrophosphate, and dicalcium phosphate dihydrate;
and the dicalcium phosphate dihydrate in the combination being at least 10 wt% of the total weight of the acid combination.

2. The composition of claim 1, wherein the dicalcium phosphate dihydrate in the combination is at least 15 wt% of the total weight of the acid combination.

3. The composition of claim 1, wherein the dicalcium phosphate dihydrate in the combination is about 15 wt% to about 50 wt% of the total weight of the acid combination.

4. The composition of claim 1, wherein the leavening acid combination has a neutralizing value of about 40 to about 65.

5. The composition of claim 1, wherein the leavening system is present from about 0.5 wt% to about 8 wt% based upon the weight of the flour.

6. The composition of claim 1, wherein the leavening system is present from about 0.5 wt% to about 5 wt% based upon the weight of the flour.

7. The composition of claim 1, wherein the leavening system is present from about 1 wt% to about 3 wt% based upon the weight of the flour.

8. The composition of claim 1, wherein the leavening acid combination is sodium aluminum phosphate and dicalcium phosphate dihydrate.

9. The composition of claim 1, wherein the leavening acid combination is sodium acid pyrophosphate and dicalcium phosphate dihydrate.

10. The composition of claim 1, wherein the leavening acid combination is sodium aluminum phosphate, sodium acid pyrophosphate, and dicalcium phosphate dihydrate.

11. The composition of claim 1, wherein the dough composition is a tortilla dough composition.

12. The composition of claim 1, wherein the dough composition is selected from the group consisting of a focaccia dough composition, a pita dough composition, a naan dough composition and a roti dough composition.

13. The composition of claim 1, wherein the composition is frozen.

14. A method for making tortillas comprisng the step of combining:
A) flour
B) shortening
C) water
D) a leavening system having a leavening base and a leavening acid having dicalcium phosphate dihydrate.

15. A method for making tortillas according to claim 14, comprising:
A) providing a dough composition according to claim 1;
B) allowing the dough to relax;
C) dividing and rounding the dough composition to form a plurality of discrete dough balls;
D) allowing the dough balls to relax;
E) pressing the relaxed dough balls under heat and pressure to form relatively thinner dough flats;
F) heating the dough flats to form the tortillas.

16. The method of claim 15, wherein the dough balls are allowed to relax for at least about 5 minutes.

17. The method of claim 15, wherein the dough balls are allowed to relax for at least about 10 minutes.

18. The method of claim 15, wherein the dough balls are allowed to relax for about 10 to about 30 minutes.

19. The method of claim 15, wherein the relaxed dough balls are pressed between platens at about 2.75 x 10⁶ N/m² (400 pounds per square inch) to about 8.27 x 10⁶ N/m² (1200 pounds per square inch).

20. The method of claim 15, wherein the relaxed dough balls are pressed between platens, and wherein the platens are maintained at a temperature of about 175°C (350°F) to about 260°C (500°F).

21. The method of claim 15, wherein the relaxed dough balls are at a temperature of about 30°C (85°F) to about 38°C (100°F) just prior to pressing.

22. The method of claim 15, wherein the dough flats are baked for about 10 seconds or more.

23. The method of claim 15, wherein the dough flats are heated to a temperature of about 182°C (360°F) to about 260°C (500°F) for about 30 to about 50 seconds.

24. The method of claim 15, wherein the dough flats are heated for about 35 to 45 seconds.

25. The method of claim 15, wherein the slower reacting of the leavening acids in the combination is about 15 wt% to about 50 wt% of the total weight of the acid combination.

26. The method of claim 15, wherein the leavening acid combination has a neutralizing value of about 40 to about 65.

27. The method of claim 15, wherein the sodium acid pyrophosphate exhibits an evolved percentage of carbon dioxide of about 30 or less at room temperature prior to baking.

28. The method of claim 15, wherein the leavening system is present from about 0.5 wt% to about 8 wt% based upon the weight of the flour.

29. The method of claim 15, wherein the leavening system is present from about 0.5 wt% to about 5 wt% based upon the weight of the flour.

30. The method of claim 15, wherein the leavening system is present from about 1 wt% to about 3 wt% based upon the weight of the flour.

31. The method of claim 15, wherein the leavening acid combination is sodium aluminum phosphate and dicalcium phosphate dihydrate.

32. The method of claim 15, wherein the leavening acid combination is sodium acid pyrophosphate and dicalcium phosphate dihydrate.

33. The method of claim 15, wherein the leavening acid combination is sodium aluminum phosphate, sodium acid pyrophosphate, and dicalcium phosphate dihydrate.

34. A method for making tortillas according to claim 14, comprising:
A) providing a dough composition according to claim 1:
B) allowing the dough composition to relax;
C) flattening the relaxed dough composition to form relatively thinner dough flats; and
D) baking the dough flats to form the tortillas.

35. The method of claim 34, wherein the relaxed dough composition is divided and rounded to form a plurality of discrete dough balls, wherein the dough balls are frozen, wherein the dough balls are allowed to thaw to a machineable higher temperature, and wherein the dough balls are flattened to form the dough flats.

36. A method for making tortillas according to claim 14, comprising:
A) providing a dough composition according to claim 1
B) allowing the dough composition to relax;
C) rolling dough to form a sheet;
D) cutting the dough to form discrete dough flats, and
E) baking the dough flats to form the tortillas.

37. A method for making tortillas according to claim 14, comprising:
A) providing a dough composition according to claim 1
B) allowing the dough composition to relax;
C) dividing and rounding the dough composition to form a plurality of discrete dough balls;
D) allowing the dough balls to relax;
E) rolling the relaxed dough balls to form relatively thinner dough flats;
F) reshaping the periphery of the dough flats; and
G) baking the reshaped dough flats to form the tortillas.

38. The method of claim 14, wherein the leavening acid further has a co-leavening acid that is faster-acting than dicalcium phosphate dihydrate.

## Patentansprüche

1. Eine Teigzusammensetzung, umfassend:
A) Mehl;
B) Backfett;
C) Wasser; und
D) ein Backtriebsystem mit einer Backtriebbase und einer Backtriebsäurenkombination, die aus der Gruppe ausgewählt wird, die aus Folgendem besteht:
a) Natriumaluminiumphosphat und Dicalciumphosphatdihydrat;
b) saures Natriumpyrophosphat und Dicalciumphosphatdihydrat;
c) Natriumaluminiumphosphat, saures Natriumpyrophosphat und Dicalciumphosphatdihydrat; wobei das Dicalciumphosphatdihydrat in der Kombination mindestens 10 Gew.-% des Gesamtgewichts der Säurenkombination ausmacht.

2. Die Zusammensetzung nach Anspruch 1, wobei das Dicalciumphosphatdihydrat in der Kombination mindestens 15 Gew.-% des Gesamtgewichts der Säurenkombination ausmacht.

3. Die Zusammensetzung nach Anspruch 1, wobei das Dicalciumphosphatdihydrat in der Kombination etwa 15 Gew.-% bis etwa 50 Gew.-% des Gesamtgewichts der Säurenkombination ausmacht.

4. Die Zusammensetzung nach Anspruch 1, wobei die Backtriebsäurenkombination einen Neutralisationswert von etwa 40 bis etwa 65 aufweist.

5. Die Zusammensetzung nach Anspruch 1, wobei das Backtriebsystem in einem Ausmaß von etwa 0,5 Gew.-% bis etwa 8 Gew.-% auf der Basis des Gewichts des Mehls vorhanden ist.

6. Die Zusammensetzung nach Anspruch 1, wobei das Backtriebsystem in einem Ausmaß von etwa 0,5 Gew.-% bis etwa 5 Gew.-% auf der Basis des Gewichts des Mehls vorhanden ist.

7. Die Zusammensetzung nach Anspruch 1, wobei das Backtriebsystem in einem Ausmaß von etwa 1 Gew.-% bis etwa 3 Gew.-% auf der Basis des Gewichts des Mehls vorhanden ist.

8. Die Zusammensetzung nach Anspruch 1, wobei die Backtriebsäurenkombination Natriumaluminiumphosphat und Dicalciumphosphatdihydrat ist.

9. Die Zusammensetzung nach Anspruch 1, wobei die Backtriebsäurenkombination saures Natriumpyrophosphat und Dicalciumphosphatdihydrat ist.

10. Die Zusammensetzung nach Anspruch 1, wobei die Backtriebsäurenkombination Natriumaluminiumphosphat, saures Natriumpyrophosphat und Dicalciumphosphatdihydrat ist.

11. Die Zusammensetzung nach Anspruch 1, wobei die Teigzusammensetzung eine Tortillateigzusammensetzung ist.

12. Die Zusammensetzung nach Anspruch 1, wobei die Teigzusammensetzung aus der Gruppe gewählt wird, die gebildet wird aus einer Focacciateigzusammensetzung, einer Pitateigzusammensetzung, einer Naanteigzusammensetzung und einer Rotiteigzusammensetzung.

13. Die Zusammensetzung nach Anspruch 1, wobei die Zusammensetzung tiefgekühlt ist.

14. Ein Verfahren zur Herstellung von Tortillas, umfassend den Schritt des Kombinierens von
A) Mehl;
B) Backfett;
C) Wasser;
D) einem Backtriebsystem, umfassend eine Backtriebbase und eine Backtriebsäure mit Dicalciumphosphatdihydrat.

15. Ein Verfahren zur Herstellung von Tortillas nach Anspruch 14, das Folgendes umfasst:
A) Bereitstellen einer Teigzusammensetzung nach Anspruch 1;
B) Rastenlassen des Teigs;
C) Teilen und Runden der Teigzusammensetzung, um eine Vielzahl separater Teigkugeln zu formen;
D) Rastenlassen des Teigs;
E) Pressen der ausgerasteten Teigkugeln unter Hitze und Druck, um relativ gesehen dünnere Teigscheiben zu bilden;
F) Erhitzen der Teigscheiben, um die Tortillas zu bilden.

16. Das Verfahren nach Anspruch 15, wobei man die Teigkugeln mindestens etwa 5 Minuten rasten lässt.

17. Das Verfahren nach Anspruch 15, wobei man die Teigkugeln mindestens etwa 10 Minuten rasten lässt.

18. Das Verfahren nach Anspruch 15, wobei man die Teigkugeln etwa 10 bis etwa 30 Minuten rasten lässt.

19. Das Verfahren nach Anspruch 15, wobei die ausgerasteten Teigkugeln zwischen Platten mit etwa 2,75 × 10⁶ N/m² (400 Pfund pro Quadratinch) bis etwa 8,27 × 10⁶ N/m² (1200 Pfund pro Quadratinch) gepresst werden.

20. Das Verfahren nach Anspruch 15, wobei die ausgerasteten Teigkugeln zwischen Platten gepresst werden und wobei die Platten auf einer Temperatur von etwa 175°C (350°F) bis etwa 260°C (500°F) gehalten werden.

21. Das Verfahren nach Anspruch 15, wobei die ausgerasteten Teigkugeln unmittelbar vor dem Pressen eine Temperatur von etwa 30°C (85°F) bis etwa 38°C (100°F) aufweisen.

22. Das Verfahren nach Anspruch 15, wobei die Teigscheiben etwa 10 Sekunden oder länger gebacken werden.

23. Das Verfahren nach Anspruch 15, wobei die Teigscheiben etwa 30 bis etwa 50 Sekunden lang auf eine Temperatur von etwa 182°C (360°F) bis etwa 260°C (500°F) erhitzt werden.

24. Das Verfahren nach Anspruch 15, wobei die Teigscheiben etwa 35 bis etwa 45 Sekunden lang erhitzt werden.

25. Das Verfahren nach Anspruch 15, wobei die langsamer reagierende der Backtriebsäuren in der Kombination etwa 15 Gew.-% bis etwa 50 Gew.-% des Gesamtgewichts der Säurekombination ausmacht.

26. Das Verfahren nach Anspruch 15, wobei die Backtriebsäurenkombination einen Neutralisationswert von etwa 40 bis etwa 65 aufweist.

27. Das Verfahren nach Anspruch 15, wobei das saure Natriumpyrophosphat bei Raumtemperatur vor dem Backen eine Prozentzahl an freigesetztem Kohlendioxid von etwa 30 oder weniger aufweist.

28. Das Verfahren nach Anspruch 15, wobei das Backtriebsystem in einem Ausmaß von etwa 0,5 Gew.-% bis etwa 8 Gew.-% auf der Basis des Gewichts des Mehls vorhanden ist.

29. Das Verfahren nach Anspruch 15, wobei das Backtriebsystem in einem Ausmaß von etwa 0,5 Gew.-% bis etwa 5 Gew.-% auf der Basis des Gewichts des Mehls vorhanden ist.

30. Das Verfahren nach Anspruch 15, wobei das Backtriebsystem in einem Ausmaß von etwa 1 Gew.-% bis etwa 3 Gew.-% auf der Basis des Gewichts des Mehls vorhanden ist.

31. Das Verfahren nach Anspruch 15, wobei die Backtriebsäurenkombination Natriumaluminiumphosphat und Dicalciumphosphatdihydrat ist.

32. Das Verfahren nach Anspruch 15, wobei die Backtriebsäurenkombination saures Natriumpyrophosphat und Dicalciumphosphatdihydrat ist.

33. Ein Verfahren nach Anspruch 15, wobei die Backtriebsäurenkombination Natriumaluminiumphosphat, saures Natriumpyrophosphat und Dicalciumphosphatdihydrat ist.

34. Das Verfahren zur Herstellung von Tortillas nach Anspruch 14, das Folgendes umfasst:
A) Bereitstellen einer Teigzusammensetzung nach Anspruch 1;
B) Rastenlassen der Teigzusammensetzung;
C) Abflachen der ausgerasteten Teigzusammensetzung, um relativ gesehen dünnere Teigscheiben zu bilden; und
D) Backen der Teigscheiben, um die Tortillas zu bilden.

35. Das Verfahren nach Anspruch 34, wobei die ausgerastete Teigzusammensetzung geteilt und gerundet wird, um eine Vielzahl separater Teigkugeln zu bilden, wobei die Teigkugeln tiefgekühlt werden, wobei die Teigkugeln auf eine maschinell bearbeitbare höhere Temperatur aufgetaut werden, und wobei die Teigkugeln abgeflacht werden, um die Teigscheiben zu bilden.

36. Ein Verfahren zur Herstellung von Tortillas nach Anspruch 14, das Folgendes umfasst:
A) Bereitstellen einer Teigzusammensetzung nach Anspruch 1;
B) Rastenlassen der Teigzusammensetzung;
C) Ausrollen des Teigs, um eine Fläche zu bilden;
D) Zuschneiden des Teigs, um separate Teigscheiben zu formen; und
E) Backen der Teigscheiben, um die Tortillas zu bilden.

37. Ein Verfahren zur Herstellung von Tortillas nach Anspruch 14, das Folgendes umfasst:
A) Bereitstellen einer Teigzusammensetzung nach Anspruch 1;
B) Rastenlassen der Teigzusammensetzung;
C) Teilen und Runden der Teigzusammensetzung, um eine Vielzahl separater Teigkugeln zu formen;
D) Rastenlassen der Teigkugeln;
E) Ausrollen der ausgerasteten Teigkugeln, um relativ gesehen dünnere Teigscheiben zu bilden;
F) Neuformen des Umfangs der Teigscheiben; und
G) Backen der neu geformten Teigscheiben, um die Tortillas zu bilden.

38. Das Verfahren nach Anspruch 14, wobei die Backtriebsäure darüber hinaus eine gemeinsam vorhandene Backtriebsäure umfasst, die rascher wirkt als Dicalciumphosphatdihydrat.

## Revendications

1. Une composition de pâte, comprenant:
A) farine;
B) matières grasses;
C) l'eau; et
D) un système de levée comportant une base de levée et une combinaison d'acides de levée choisie parmi le groupe constitué de
a) phosphate d'aluminium et de sodium et phosphate dicalcique dihydraté ;
b) pyrophosphate acide de sodium et phosphate dicalcique dihydraté ;
c) phosphate d'aluminium et de sodium, pyrophosphate acide de sodium et phosphate dicalcique dihydraté ;
et le phosphate dicalcique dihydraté dans la combinaison représentant au moins 10 % en poids du poids total de la combinaison d'acides.

2. La composition selon la revendication 1, dans laquelle le phosphate dicalcique dihydraté dans la combinaison représente au moins 15 % en poids du poids total de la combinaison d'acides.

3. La composition selon la revendication 1, dans laquelle le phosphate dicalcique dihydraté dans la combinaison représente d'environ 15 % en poids à environ 50 % en poids du poids total de la combinaison d'acides.

4. La composition selon la revendication 1, dans laquelle la combinaison d'acides de levée a un indice de neutralisation d'environ 40 à environ 65.

5. La composition selon la revendication 1, dans laquelle le système de levée est présent d'environ 0,5 % en poids à environ 8 % en poids par rapport au poids de la farine.

6. La composition selon la revendication 1, dans laquelle le système de levée est présent d'environ 0,5 % en poids à environ 5 % en poids par rapport au poids de la farine.

7. La composition selon la revendication 1, dans laquelle le système de levée est présent d'environ 1 % en poids à environ 3 % en poids par rapport au poids de la farine.

8. La composition selon la revendication 1, dans laquelle la combinaison d'acides de levée est du phosphate d'aluminium et de sodium et du phosphate dicalcique dihydraté.

9. La composition selon la revendication 1, dans laquelle la combinaison d'acides de levée est du pyrophosphate acide de sodium et du phosphate dicalcique dihydraté.

10. La composition selon la revendication 1, dans laquelle la combinaison d'acides de levée est du phosphate d'aluminium et de sodium, du pyrophosphate acide de sodium et du phosphate dicalcique dihydraté.

11. La composition selon la revendication 1, dans laquelle la composition de pâte est une composition de pâte à tortilla.

12. La composition selon la revendication 1, dans laquelle la composition de pâte est choisie parmi le groupe constitué d'une composition de pâte à fougasse, d'une composition de pâte à pita, d'une composition de pâte à naan et d'une composition de pâte à roti.

13. La composition selon la revendication 1, dans laquelle la composition est congelée.

14. Une procédé de fabrication de tortillas comprenant l'étape consistant à mélanger:
A) farine
B) matières grasses
C) l'eau
D) un système de levée comportant une base de levée et un acide de levée comportant du phosphate dicalcique dihydraté.

15. Une procédé de fabrication de tortillas selon la revendication 14, consistant à :
A) fournir une composition de pâte selon la revendication 1 ;
B) laisser la pâte reposer ;
C) diviser et arrondir la composition de pâte pour former une pluralité de boules de pâte distinctes ;
D) laisser les boules de pâte reposer ;
E) presser à la chaleur et sous pression les boules de pâte ayant reposé pour former des morceaux de pâte aplatis relativement plus minces ;
F) chauffer les morceaux de pâte aplatis pour former les tortillas.

16. La procédé selon la revendication 15, dans lequel on laisse reposer les boules de pâte pendant au moins environ 5 minutes.

17. La procédé selon la revendication 15, dans lequel on laisse reposer les boules de pâte pendant au moins environ 10 minutes.

18. La procédé selon la revendication 15, dans lequel on laisse reposer les boules de pâte pendant environ 10 à environ 30 minutes.

19. La procédé selon la revendication 15, dans lequel les boules de pâte ayant reposé sont pressées entre des cylindres à environ 2,75 x 10⁶ N/m² (400 livres par pouce carré) jusqu'à environ 8,27 x 10⁶ N/m² (1200 livres par pouce carré).

20. La procédé selon la revendication 15, dans lequel les boules de pâte ayant reposé sont pressées entre des cylindres, et dans lequel les cylindres sont maintenus à une température d'environ 175°C (350°F) à environ 260°C (500°F).

21. La procédé selon la revendication 15, dans lequel les boules de pâte ayant reposé sont à une température d'environ 30°C (85°F) à environ 38°C (100°F) juste avant le pressage.

22. La procédé selon la revendication 15, dans lequel les morceaux de pâte aplatis sont cuits pendant environ 10 secondes ou plus.

23. La procédé selon la revendication 15, dans lequel les morceaux de pâte aplatis sont chauffés à une température d'environ 182°C (360°F) à environ 260°C (500°F) pendant environ 30 à environ 50 secondes.

24. La procédé selon la revendication 15, dans lequel les morceaux de pâte aplatis sont chauffés pendant environ 35 à 45 secondes.

25. La procédé selon la revendication 15, dans lequel la part des acides de levée à réaction plus lente dans la combinaison est d'environ 15 % en poids à environ 50 % en poids du poids total de la combinaison d'acides.

26. La procédé selon la revendication 15, dans lequel la combinaison d'acides de levée a un indice de neutralisation d'environ 40 à environ 65.

27. La procédé selon la revendication 15, dans lequel le pyrophosphate acide de sodium présente un pourcentage amélioré de dioxyde de carbone d'environ 30 ou moins à température ambiante avant la cuisson.

28. La procédé selon la revendication 15, dans lequel le système de levée est présent d'environ 0,5 % en poids à environ 8 % en poids par rapport au poids de la farine.

29. La procédé selon la revendication 15, dans lequel le système de levée est présent d'environ 0,5 % en poids à environ 5 % en poids par rapport au poids de la farine.

30. La procédé selon la revendication 15, dans lequel le système de levée est présent d'environ 1 % en poids à environ 3 % en poids par rapport au poids de la farine.

31. La procédé selon la revendication 15, dans lequel la combinaison d'acides de levée est du phosphate d'aluminium et de sodium et du phosphate dicalcique dihydraté.

32. La procédé selon la revendication 15, dans lequel la combinaison d'acides de levée est du pyrophosphate acide de sodium et du phosphate dicalcique dihydraté.

33. La procédé selon la revendication 15, dans lequel la combinaison d'acides de levée est du phosphate d'aluminium et de sodium, du pyrophosphate acide de sodium et du phosphate dicalcique dihydraté.

34. Une procédé de fabrication de tortillas selon la revendication 14, consistant à
A) fournir une composition de pâte selon la revendication 1 ;
B) laisser la composition de pâte reposer ;
C) aplatir la composition de pâte ayant reposé pour former des morceaux de pâte aplatis relativement plus minces ;
D) cuire les morceaux de pâte aplatis pour former les tortillas.

35. La procédé selon la revendication 34, dans lequel la composition de pâte ayant reposé est divisée et arrondie pour former une pluralité de boules de pâte distinctes, dans lequel les boules de pâte sont congelées, dans lequel on laisse décongeler les boules de pâte à une température de traitement plus élevée, et dans lequel les boules de pâte sont aplaties pour former les morceaux de pâte aplatis.

36. Une procédé de fabrication de tortillas selon la revendication 14, consistant à :
A) fournir une composition de pâte selon la revendication 1 ;
B) laisser la composition de pâte reposer ;
C) rouler la pâte pour former une feuille ;
D) couper la pâte pour former des morceaux de pâte aplatis distincts, et
F) cuire les morceaux de pâte aplatis pour former les tortillas.

37. Une procédé de fabrication de tortillas selon la revendication 14, consistant à :
A) fournir une composition de pâte selon la revendication 1 ;
B) laisser la composition de pâte reposer ;
C) diviser et arrondir la composition de pâte pour former une pluralité de boules de pâte distinctes ;
D) laisser les boules de pâte reposer ;
E) rouler les boules de pâte ayant reposé pour former des morceaux de pâte aplatis relativement plus minces ;
F) remodeler la périphérie des morceaux de pâte aplatis ; et
G) cuire les morceaux de pâte aplatis pour former les tortillas.

38. La procédé selon la revendication 14, dans lequel l'acide de levée comporte en outre un acide de co-levée qui a une action plus rapide que le phosphate dicalcique dihydraté.
